# EUROPEAN PATENT APPLICATION

(11) **EP 4 848 368 A1**
(43) Date of publication of application: **02.12.2026**
(21) Application number: 25774806.1
(22) Date of filing: 19.03.2025
(51) Int. Cl.: H01M 4/525, H01M 4/505, H01M 4/131, H01M 10/052, C01G 53/50, H01M 4/02

(54) **METHOD FOR MANUFACTURING POSITIVE ELECTRODE ACTIVE MATERIAL**

(30) Priority: 19.03.2024 KR 20240037990
(71) Applicant: LG Chem, Ltd., Seoul 07336 (KR)
(72) Inventor: KIM, Kyung Gu, Yuseong-gu Daejeon 34122 (KR); JEONG, Myung Gi, Yuseong-gu Daejeon 34122 (KR); KIM, Jeong Won, Yuseong-gu Daejeon 34122 (KR); KIM, Sol Jin, Yuseong-gu Daejeon 34122 (KR); KIM, Kyung Han, Yuseong-gu Daejeon 34122 (KR); SEONG, Jun Mo, Yuseong-gu Daejeon 34122 (KR)
(74) Representative: Hoffmann Eitle
(86) International application number: PCT/KR2025/003574
(87) International publication number: WO 2025/198334

(57) **Abstract**

The present invention relates to a method for manufacturing a positive electrode active material capable of providing a positive electrode active material which can improve the capacity, initial efficiency, and resistance characteristics of a battery by having uniform particle diameters of primary particles which are unit particles, the method comprising the steps of: (A) preparing a mixture by mixing a nickel-cobalt-manganese-based hydroxide having a nickel content of 50 mol% or more from among total transition metals and a lithium-containing raw material; (B) calcining the mixture at 300°C or above but less than 450°C, under an oxygen atmosphere to manufacture a calcined product; and (C) selectively mixing a doping element-containing raw material with the calcined product and then sintering the mixture at 700°C to 1,100°C under an oxygen atmosphere to manufacture a sintered product.

## Description

### [Technical Field]

### CROSS-REFERENCE TO RELATED APPLICATION

The present application claims priority to Korean Patent Application No. 10-2024-0037990, filed on March 19, 2024, the entire content of which is incorporated herein for all purposes by reference.

### Technical Field

The present invention relates to a method for manufacturing a positive electrode active material, and more particularly, to a method for manufacturing a positive electrode active material having a uniform particle diameter of unit particles.

### [Background Art]

Recently, as technology development and demand for mobile devices and electric vehicles increase, demand for secondary batteries as an energy source is rapidly increasing. Among the secondary batteries, a lithium secondary battery, which has high energy density and voltage, long cycle lifespan and low self-discharge rate, has been commercialized and is widely used.

As positive electrode active materials for the lithium secondary batteries, lithium transition metal oxides such as lithium cobalt oxide such as LiCoO₂, lithium nickel oxide such as LiNiO₂, lithium manganese oxide such as LiMnO₂ or LiMn₂O₄, and lithium iron phosphate oxide such as LiFePO₄ have been developed, and recently, lithium composite transition metal oxides containing two or more transition metals such as Li[NiₐCo_{b}Mn_{c}]O₂, Li[NiₐCo_{b}Al_{c}]O₂, and Li[NiₐCo_{b}Mn_{c}Al_{d}]O₂ have been developed and are widely used.

Lithium composite transition metal oxides containing two or more transition metals developed to date are usually manufactured in the form of a spherical secondary particle in which tens to hundreds of primary particles are aggregated. However, recently, in order to solve the structural and thermal stability problems of the secondary particle-type positive electrode active material itself, the development of a single particle-type positive electrode active material is being accelerated. Specifically, when a positive electrode active material in the form of a secondary particle is applied to a lithium secondary battery, there is a problem that a large amount of gas is generated, causing the volume of the battery to expand. When the content of nickel in the positive electrode active material is increased for high capacity, there is also a problem that the risk of fire increases. Accordingly, the demand for the development of a positive electrode active material in the form of a single particle with excellent stability is increasing.

However, the positive electrode active material in the form of a single particle has a problem of capacity reduction due to an increase in resistance caused by a decrease in reaction specific surface area and an increase in diffusion length within the positive electrode active material, and a problem that the particle diameter of the unit particle is uneven due to the uneven particle growth during calcination, and thus the mass productivity is low.

Therefore, there is a need to develop a single particle-type positive electrode active material with improved capacity and a uniform particle diameter of unit particles.

### [Disclosure]

### [Technical Problem]

The present invention is intended to solve the above problems, and aims to provide a method for manufacturing a single particle-type positive electrode active material having a uniform particle diameter of unit particles.

### [Technical Solution]

In order to solve the above problems, the present invention provides a method for manufacturing a positive electrode active material.
(1) The present invention provides a method for manufacturing a positive electrode active material, including the steps of: (A) mixing a nickel cobalt manganese-based hydroxide having a nickel content of 50 mol% or more among the total transition metals with a lithium-containing raw material to prepare a mixture; (B) pre-calcining the mixture at 300°C or higher and less than 450°C under an oxygen atmosphere to prepare a pre-calcined product; and (C) selectively mixing a doping element-containing raw material into the pre-calcined product and then calcining the mixture at 700°C to 1,100°C under an oxygen atmosphere to produce a calcined product.
(2) The present invention provides the method for manufacturing a positive electrode active material according to (1) above, wherein the nickel cobalt manganese-based hydroxide has a composition represented by the following Chemical Formula 2:

   [Chemical Formula 2] Niₐ₂Co_{b2}Mn_{c2}M²_{d2}(OH)₂

   wherein:
   M² is at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si,
   0.5≤a2<1, 0<b2<0.5, 0<c2<0.5, 0≤d2≤0.2, and a2+b2+c2+d2=1.
(3) The present invention provides the method for manufacturing a positive electrode active material according to (1) or (2) above, wherein the calcination in the step (C) is performed by first calcining at 700°C to 1,000°C under an oxygen atmosphere, and then second calcining at 700°C to 1,100°C, wherein the first calcination temperature is higher than the second calcination temperature.
(4) The present invention provides the method for manufacturing a positive electrode active material according to any one of (1) to (3) above, wherein the positive electrode active material comprises a lithium nickel cobalt manganese-based oxide in the form of a single particle, which has a nickel content of 50 mol% or more among the total transition metal and is composed of 50 or less primary particles, wherein the primary particles have a span ((D_{v,90}-D_{v,10})/D_{v,50}) value of 1.2 or less.
(5) The present invention provides the method for manufacturing a positive electrode active material according to (4) above, wherein the lithium nickel cobalt manganese-based oxide has a composition represented by the following Chemical Formula 1:

   [Chemical Formula 1] Li₁₊ₓNiₐ₁Co_{b1}Mn_{c1}M¹_{d1}O₂

   wherein:
   M¹ is at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si,
   0.0≤x≤0.1, 0.5≤a1<1, 0<b1<0.5, 0<c1<0.5, 0≤d1≤0.2, and a1+b1+c1+d1=1.
(6) The present invention provides the method for manufacturing a positive electrode active material according to (4) or (5) above, wherein the D_{v,50} of the primary particle is 0.5 µm to 10 µm.
(7) The present invention provides the method for manufacturing a positive electrode active material according to any one of (1) to (6) above, wherein the positive electrode active material has a D₅₀ of 3 µm to 10 µm as measured by a particle size analyzer (PSA).

### [Advantageous Effects]

According to the method for manufacturing a positive electrode active material of the present invention, a lithium nickel cobalt manganese-based oxide in the form of a single particle composed of 50 or less primary particles is included, and the span ((D_{v,90}-D_{v,10})/D_{v,50}) value of the primary particles satisfies 1.2 or less, thereby enabling effective manufacturing of a positive electrode active material that has improved positive electrode active material particle breakage during rolling for manufacturing a lithium secondary battery and is capable of improving the capacity, initial efficiency, and resistance characteristics of a lithium secondary battery.

### [Description of Drawings]

FIGS. 1 to 8 are SEM images (5000×) of each positive electrode active material manufactured in Examples and Comparative Examples.

FIGS. 9 to 16 are diagrams in which SEM images (5000×) of each positive electrode active material manufactured in Examples and Comparative Examples are image-processed and the boundaries of primary particles are divided and displayed in random colors.

### [Best Modes of the Invention]

Hereinafter, the present invention will be described in more detail to help understand the present invention.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

It should be understood that terms such as 'comprise', 'include', and "have" as used herein are intended to designate the presence of implemented features, numbers, steps, components, or combinations thereof, but not to preclude a possibility of existence or addition of one or more other features, numbers, steps, components, or combinations thereof.

In this specification, the term 'on~' is meant to include not only a case where a component is formed directly on another component, but also a case where a third component is interposed between these components.

In this specification, a 'single particle form' is a concept that is in contrast to a spherical secondary particle form formed by aggregation of tens to hundreds of primary particles manufactured by a conventional method, and refers to a form composed of 50 or less primary particles. Specifically, the single particle form in the present invention may be a single particle composed of one primary particle, or may be in the form of a secondary particle in which 2 to 50, 2 to 40, 2 to 30, 2 to 20, or 2 to 10 primary particles are aggregated.

A 'primary particle' refers to a minimum particle unit recognized when observing a positive electrode active material through a scanning electron microscope, and a 'secondary particle' refers to a secondary structure formed by aggregation of a plurality of primary particles.

In this specification, 'D₅₀ measured by particle size analyzer (PSA)' means a particle diameter at 50% point of a volume cumulative distribution according to the particle diameter. The D₅₀ can be measured by dispersing the powder to be measured in a dispersion medium and then introducing it into a commercially available laser diffraction particle size measuring device (e.g., Mastersizer 3000 of Malvern), measuring a difference in diffraction patterns according to the particle size when the particles pass through the laser beam to obtain a particle size distribution, and calculating a particle diameter at a point that is 50% of the volume cumulative distribution according to the particle size in the measuring device.

In this specification, 'D_{v,10}, D_{v,50}, D_{v,90}' of primary particle can be obtained by calculating the area of each primary particle through the number of pixels corresponding to each of n primary particles present in the SEM image, calculating the particle diameter and volume of each primary particle present in the SEM image using the radius value of a circle having the same area as the area of each primary particle, and calculating the particle diameter at points that are 10%, 50%, and 90% of the volume cumulative distribution according to the particle diameter. In addition, the span value of the primary particle is a value obtained by substituting the 'D_{v,10}, D_{v,50}, D_{v,90}' into (D_{v,90}-D_{v,10})/D_{v,50}.

### Method of Manufacturing a Positive Electrode Active Material

The method for manufacturing a single particle-type positive electrode active material according to the present invention includes the steps of: (A) mixing a nickel cobalt manganese-based hydroxide having a nickel content of 50 mol% or more among the total transition metals with a lithium-containing raw material to prepare a mixture; (B) pre-calcining the mixture at 300°C or higher and less than 450°C under an oxygen atmosphere to prepare a pre-calcined product; and (C) selectively mixing a doping element-containing raw material into the pre-calcined product and then calcining the mixture at 700°C to 1,100°C under an oxygen atmosphere to produce a calcined product.

The present inventors have found that when the mixture is subjected to pre-calcination at 300°C or higher and less than 450°C under an oxygen atmosphere, followed by main calcination at 700°C to 1,100°C under an oxygen atmosphere, the crystallinity is improved, so that a positive electrode active material in the form of a single particle with a uniform primary particle diameter is produced, thereby not only improving mass productivity but also reducing the breakage of the positive electrode active material particles during rolling for manufacturing a lithium secondary battery and thus improving the performance of the battery, thereby completing the present invention.

### Step (A)

The step (A) is a step of mixing a nickel cobalt manganese-based hydroxide having a nickel content of 50 mol% or more among the total transition metals with a lithium-containing raw material to prepare a mixture.

According to the present invention, the nickel cobalt manganese-based hydroxide may have a composition represented by Chemical Formula 2 below:

[Chemical Formula 2] Niₐ₂Co_{b2}Mn_{c2}M²_{d2}(OH)₂

wherein:
M² is at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si,
0.5≤a2<1, 0<b2<0.5, 0<c2<0.5, 0≤d2≤0.2, and a2+b2+c2+d2=1.

According to the present invention, the a2 in Chemical Formula 2 above refers to an atomic fraction of nickel among the metal elements in the composite transition metal hydroxide, and may be 0.5 or more, 0.6 or more, 0.7 or more, 0.8 or more, 0.9 or more, or 0.95 or more, and may be 0.98 or less, or less than 1.0. When the a2 satisfies the above range, the high-capacity characteristic of a battery including the positive electrode active material produced as a result can be implemented.

According to the present invention, the b2 in Chemical Formula 2 above refers to an atomic fraction of cobalt among the metal elements in the composite transition metal hydroxide, and may be greater than 0.0, or 0.01 or more, and may be 0.05 or less, 0.1 or less, 0.2 or less, 0.3 or less, 0.4 or less, or less than 0.5. When the b2 satisfies the above range, stability can be improved and rate characteristics can be enhanced during the charging/discharging process of a battery including the positive electrode active material produced as a result.

According to the present invention, the c2 in Chemical Formula 2 above refers to an atomic fraction of manganese among the metal elements in the composite transition metal hydroxide, and may be greater than 0.0, or 0.01 or more, and may be 0.05 or less, 0.1 or less, 0.2 or less, 0.3 or less, 0.4 or less, or less than 0.5. When the c2 satisfies the above range, the high-capacity characteristic of a battery including the positive electrode active material produced as a result can be implemented. In addition, the high-temperature stability of the battery can be increased, and side reactions with an electrolyte can be relatively reduced.

According to the present invention, the d2 in Chemical Formula 2 above refers to an atomic fraction of M² element among the metal elements in the composite transition metal hydroxide, and may be 0.0 or more, and 0.05 or less, 0.1 or less, or 0.2 or less. When the d2 satisfies the above range, the crystal structure stability of the positive electrode active material produced as a result can be enhanced, and the particle shape can be improved.

According to the present invention, the lithium-containing raw material may be lithium-containing sulfate, nitrate, acetate, carbonate, oxalate, citrate, halide, hydroxide, or oxyhydroxide, but is not particularly limited as long as it is soluble in water. Specifically, the lithium-containing raw material may be Li₂CO₃, LiNO₃, LiNO₂, LiOH, LiOH · H2O, LiH, LiF, LiCl, LiBr, LiI, CH₃COOLi, Li₂O, Li₂SO4, CH₃COOLi, or Li₃C₆H₅O₇, and any one or a mixture of two or more thereof may be used.

According to the present invention, the composite transition metal hydroxide and the lithium-containing raw material may be mixed so that a ratio (M:Li) of the total mole number (M) of transition metals included in the composite transition metal hydroxide and the mole number (Li) of lithium included in the lithium-containing raw material is 1:1.0 to 1.1, 1:1.01 to 1.09, 1:1.02 to 1.08, 1:1.03 to 1.07, 1:1.04 to 1.07, or :1.05 to 1.07.

### Step (B)

The step (B) is a step of preparing a pre-calcined product by pre-calcining the mixture at 300°C or higher and less than 450°C under an oxygen atmosphere.

According to the present invention, when the mixture is pre-calcined at 300°C or higher and less than 450°C under an oxygen atmosphere, there is an effect that the primary particle size of the single particle becomes uniform, and a reaction in which LiOH changes to Li₂O and Li of Li₂O is inserted into the layered structure of the positive electrode material, so that the capacity increases.

The pre-calcination temperature may specifically be 300°C or higher, 350°C or higher, or 400°C or higher, and may be 400°C or lower, 410°C or lower, 420°C or lower, 430°C or lower, 440°C or lower, or less than 450°C. When the pre-calcination temperature is within the above range, the primary particle size of the single particle can become uniform.

On the other hand, when the pre-calcination temperature is less than 300°C, the precursor and lithium do not react, so a layered structure including lithium cannot be formed, and when it is 450°C or higher, a problem occurs in which single crystallization occurs continuously due to the high-temperature heat. In this case, the size of a specific particle may increase, causing a problem of nonuniformity between particles.

According to the present invention, the pre-calcination is performed under an oxygen atmosphere in order to increase the crystallinity of the layered structure.

According to the present invention, the pre-calcination may be performed for 3 to 10 hours. In this case, there is an effect that the size of the single particles becomes uniform.

### Step (C)

The step (C) is a step of selectively mixing a doping element-containing raw material into the pre-calcined product and then calcining the mixture at 700°C to 1,100°C under an oxygen atmosphere to produce a calcined product. Here, the calcined product is a lithium nickel cobalt manganese-based oxide in the form of a single particle, which has a nickel content of 50 mol% or more among the total transition metal and is composed of 50 or less primary particles

According to the present invention, when the pre-calcined product is calcined at 700°C to 1,100°C under an oxygen atmosphere, it can have excellent crystallinity through sufficient insertion of lithium into the layered structure of the positive electrode material.

The calcination temperature may specifically be 700°C or higher, 710°C or higher, 720°C or higher, 730°C or higher, 740°C or higher, 750°C or higher, 760°C or higher, or 770°C or higher, and 840°C or lower, 850°C or lower, 900°C or lower, 950°C or lower, 1,000°C or lower, 1,050°C or lower, or 1,100°C or lower. When the calcination temperature is within the above range, there is an effect of improving the crystallinity of single particles.

On the other hand, when the calcination temperature is lower than 700°C, there is a problem that a degree of single-particle formation is lowered, and when it is higher than 1,100°C, there is a problem that lithium in the positive electrode material structure is deintercalated, thereby lowering the crystallinity.

According to the present invention, the calcination is performed under an oxygen atmosphere in order to suppress Li₂CO₃ production and implement excellent crystallinity of the positive electrode material.

According to the present invention, the calcination may be performed for 5 to 15 hours. In this case, excellent single-particle formation degree and crystallinity can be obtained.

According to the present invention, the calcination may be one calcination or two calcinations. Specifically, the calcination may be performed only once at 700°C to 1,100°C under an oxygen atmosphere on the pre-calcined product, or may be performed by first calcining the pre-calcined product at 700°C to 1,000°C under an oxygen atmosphere and then second calcining it at 700°C to 1,100°C. In this case, the first calcination temperature may be higher than the second calcination temperature.

When the calcination in the step (C) is performed by first calcining at 700°C to 1,000°C under an oxygen atmosphere, and then second calcining at 700°C to 1,100°C, a positive electrode material having excellent crystallinity can be manufactured.

In this case, the powder obtained by first calcining the pre-calcined product may be pulverized, and then subjected to second calcination, and the pulverization may be performed using a pin mill.

In addition, according to one embodiment of the present invention, the powder obtained by first calcination may be mixed with a doping element-containing raw material, and then subjected to second calcination.

The first calcination may be performed for 5 to 15 hours, and the second calcination may be performed for 5 to 15 hours. In this case, excellent single-particle formation degree and crystallinity can be obtained.

The method for manufacturing a positive electrode active material according to the present invention may further include (D) a step of finely pulverizing the calcined product in order to improve the capacity through uniform application of the positive electrode active material during electrode manufacturing.

According to the present invention, the fine pulverization may be performed by airflow pulverization. In this case, pulverization is possible in accordance with a target particle size range, which is advantageous in adjusting the particle size optimized for capacity and lifespan performance.

According to the present invention, the airflow pulverization may be performed under a pressure of 1.5 bar to 5 bar. In this case, the charge/discharge capacity and lifespan performance of the positive electrode active material can be improved through uniform pulverization without damaging the primary particles.

The method for manufacturing a positive electrode active material according to the present invention may further include (C') a step of forming a coating part on the calcined product by mixing the calcined product and a coating raw material and then performing heat treatment. In this case, a coating part is formed on the calcined product (lithium nickel cobalt manganese-based oxide in the form of a single particle).

The heat treatment may be performed under an air atmosphere, an oxygen atmosphere, or an inert atmosphere. Specifically, it may be performed under an air atmosphere because it is easy to maintain the heat treatment atmosphere and is advantageous in terms of economy.

In addition, the heat treatment may be performed under a temperature of 400°C to 600°C. When the heat treatment temperature is within the above range, sufficient heat energy required for coating can be supplied. The coating part may be in the form of partially covering (discontinuously) at least a portion on the lithium nickel cobalt manganese-based oxide, that is, a region on the lithium nickel cobalt manganese-based oxide, or covering (continuously) the entire region. The form of the coating part may be a film type, an island type, or a combination thereof.

The heat treatment may be performed for 3 to 9 hours. When the heat treatment time is within the above range, energy for forming the coating part may be sufficiently supplied.

The positive electrode active material manufactured by the manufacturing method according to the present invention comprises a lithium nickel cobalt manganese-based oxide in the form of a single particle, which has a nickel content of 50 mol% or more among the total transition metal and is composed of 50 or less primary particles, wherein the primary particles have a span ((D_{v,90}-D_{v,10})/D_{v,50}) value of 1.2 or less. The lithium nickel cobalt manganese-based oxide may have a layered structure.

The present inventors have found that when the positive electrode active material includes the lithium composite transition metal oxide in the form of the single particle and the span value of the primary particle satisfies a specific range, the positive electrode active material particles are less likely to break during rolling for manufacturing a lithium secondary battery, so that the capacity, initial efficiency, and resistance characteristics of the lithium secondary battery can be improved, thereby completing the present invention.

According to the present invention, the span ((D_{v,90}-D_{v,10})/D_{v,50}) value of the primary particle may be 1.2 or less. Specifically, the span value of the primary particle may be 0.5 or more, 0.6 or more, 0.7 or more, 0.8 or more, 0.9 or more, or 1.0 or more, and 1.05 or less, 1.1 or less, or 1.2 or less. When the span value of the primary particle is within the above range, the particle size is uniform, so that the discharge capacity, initial efficiency, and resistance characteristics of the battery can be improved.

According to the present invention, the D_{v,50} of the primary particle may be 0.5 µm to 10 µm. Specifically, the D_{v,50} of the primary particle may be 0.5 µm or more, 1.0 µm or more, 1.5 µm or more, 2.0 µm or more, 2.1 µm or more, 2.2 µm or more, 2.3 µm or more, 2.4 µm or more, 2.5 µm or more, or 2.58 µm or more, and may be 2.70 µm or less, 3.0 µm or less, 4.0 µm or less, 5.0 µm or less, 6.0 µm or less, 7.0 µm or less, 8.0 µm or less, 9.0 µm or less, or 10.0 µm or less. When the D_{v,50} of the primary particle is within the above range, the movement of lithium is advantageous, so that the charge/discharge capacity and efficiency can be improved, and the lifespan performance can be improved.

According to the present invention, the lithium nickel cobalt manganese-based oxide may have a nickel content of 50 mol% or more, 60 mol% or more, 70 mol% or more, 80 mol% or more, or 85 mol% or more among the total transition metals. That is, the lithium nickel cobalt manganese-based oxide may be a high-nickel (high Ni) lithium composite transition metal oxide. In this case, the energy density of the lithium secondary battery can be improved.

According to the present invention, the lithium nickel cobalt manganese-based oxide may have a composition represented by the following Chemical Formula 1:

[Chemical Formula 1] Li₁₊ₓNiₐ₁Co_{b1}Mn_{c1}M¹_{d1}O₂

wherein:
M¹ is at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si,
0.0≤x≤0.1, 0.5≤a1<1, 0<b1<0.5, 0<c1<0.5, 0≤d1≤0.2, and a1+b1+c1+d1=1.

According to the present invention, the a1 in Chemical Formula 1 above refers to a molar ratio of nickel among the metal elements in the lithium nickel cobalt manganese-based oxide, and may be 0.5 or more, 0.6 or more, 0.7 or more, 0.8 or more, 0.9 or more, or 0.95 or more, and may be 0.98 or less, or less than 1.0. When the a1 satisfies the above range, high energy characteristics can be implemented.

According to the present invention, the b1 in Chemical Formula 1 above refers to an atomic molar ratio of cobalt among the metal elements in the lithium nickel cobalt manganese-based oxide, and may be greater than 0.0, or 0.01 or more, and may be 0.05 or less, 0.1 or less, 0.2 or less, 0.3 or less, 0.4 or less, or less than 0.5. When the b1 satisfies the above range, the stability can be improved during the charge and discharge process, and the rate characteristics can be enhanced.

According to the present invention, the c1 in Chemical Formula 1 above refers to a molar ratio of manganese among the metal elements in the lithium nickel cobalt manganese-based oxide, and may be greater than 0.0, or 0.01 or more, and may be 0.05 or less, 0.1 or less, 0.2 or less, 0.3 or less, 0.4 or less, or less than 0.5. When the c1 satisfies the above range, high-temperature stability can be increased, and side reactions with an electrolyte can be relatively reduced.

According to the present invention, the d1 in Chemical Formula 1 above refers to a molar ratio of M¹ element among the metal elements in the lithium nickel cobalt manganese-based oxide, and may be 0.0 or more, and 0.05 or less, 0.1 or less, or 0.2 or less. When the d1 satisfies the above range, the stability of the crystal structure of the positive electrode active material can be enhanced, and the particle shape can be improved.

According to the present invention, the M¹, which is at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn and Si, is a doping element capable of improving the crystallinity and single-particle formation degree of the positive electrode active material, and although not necessarily included, when the M¹ is included, the capacity characteristics and lifespan characteristics of a battery can be improved.

According to the present invention, the positive electrode active material may have a D₅₀ of 3 µm to 10 µm as measured by a particle size analyzer (PSA). Specifically, the D₅₀ of the positive electrode active material may be 3.0 µm or more, 3.5 µm or more, 4.0 µm or more, 4.5 µm or more, 5.0 µm or more, 5.1 µm or more, 5.2 µm or more, 5.3 µm or more, or 5.4 µm or more, and may be 5.6 µm or less, 5.7 µm or less, 5.8 µm or less, 5.9 µm or less, 6.0 µm or less, 7.0 µm or less, 8.0 µm or less, 9.0 µm or less, or 1.0 µm or less. When the D₅₀ of the positive electrode active material as measured by a particle size analyzer (PSA) is within the above range, both the lifespan and capacity characteristics of a battery including the same are improved, so that the electrochemical performance can be optimized.

### Positive Electrode

The present invention provides a positive electrode including the positive electrode active material.

The positive electrode may include a positive electrode current collector and a positive electrode active material layer formed on the positive electrode current collector, wherein the positive electrode active material layer may include the positive electrode active material.

The positive electrode current collector may include a highly conductive metal, and is not particularly limited as long as the positive electrode active material layer can be easily adhered thereto and is non-reactive within the voltage range of the battery. The positive electrode current collector may be, for example, stainless steel, aluminum, nickel, titanium, calcined carbon, or aluminum or stainless steel having a surface treated with carbon, nickel, titanium, silver, etc. In addition, the positive electrode current collector may typically have a thickness of 3 µm to 500 µm, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

The positive electrode active material layer, along with the positive electrode active material, may optionally include a conductive material and a binder, if necessary. In this case, the positive electrode active material may be included in an amount of 80% to 99% by weight, more specifically 85% to 98.5% by weight, based on the total weight of the positive electrode active material layer, and can exhibit excellent capacity performance within this range.

The conductive material is used to impart conductivity to the electrode, and may be any material without particular limitation as long as it has electronic conductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive tube such as carbon nanotube; a conductive whisker such as zinc oxide and potassium titanate; a conductive metal oxide such as a titanium oxide; or a conductive polymer such as a polyphenylene derivative, and any one or a mixture of two or more thereof may be used. The conductive material may be included in an amount of 0.1% by weight to 15% by weight based on the total weight of the positive electrode active material layer.

The binder serves to improve the bonding between the positive electrode active material particles and the adhesion between the positive electrode active material and the current collector. Specific examples thereof may include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber (SBR), fluorine rubber, polyacrylic acid, the polymers in which hydrogen is substituted with Li, Na, or Ca, or various copolymers thereof, and any one or a mixture of two or more thereof may be used. The binder may be included in an amount of 0.1% by weight to 15% by weight based on the total weight of the positive electrode active material layer.

The positive electrode may be manufactured according to a conventional positive electrode manufacturing method except for the use of the positive electrode active material described above. Specifically, the above positive electrode active material and, if necessary, a binder, a conductive material, and a dispersant may be dissolved or dispersed in a solvent to prepare a composition for forming a positive electrode active material layer, which may be applied on a positive electrode current collector, and then dried and rolled to manufacture the positive electrode. Alternatively, the positive electrode may be manufactured by casting a composition for forming a positive electrode active material layer on a separate support, peeling off the support to obtain a film, and laminating the film on a positive electrode current collector.

The solvent may be any solvent commonly used in the art, for example, dimethyl sulfoxide (DMSO), isopropyl alcohol, N-methyl pyrrolidone (NMP), dimethylformamide (DMF), acetone, water, or the like, and any one or a mixture of two or more thereof may be used. The solvent may be used in an amount sufficient to dissolve or disperse the positive electrode active material, conductive material, binder, and dispersant in consideration of the application thickness of the slurry and the manufacturing yield, and to allow the slurry to have a viscosity capable of exhibiting excellent thickness uniformity when applied for the subsequent positive electrode production.

### Lithium Secondary Battery

The present invention provides a lithium secondary battery comprising: the positive electrode; a negative electrode; and a separator and an electrolyte interposed between the positive electrode and the negative electrode.

The lithium secondary battery may optionally further include a battery container for accommodating an electrode assembly formed of the positive electrode, negative electrode, and separator, and a sealing member for sealing the battery container.

The negative electrode may include a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. Additionally, the negative electrode current collector may typically have a thickness of 3 µm to 500 µm, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer may optionally include a binder and a conductive material along with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as SiO_{β} (0<β<2), SnO₂, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes. The negative electrode active material may be included in an amount of 80% to 99% by weight based on the total weight of the negative electrode active material layer.

The binder of the negative electrode active material layer is a component that assists in bonding between the conductive material, the active material, and the current collector, and is usually added in an amount of 0.1% to 10% by weight based on the total weight of the negative electrode active material layer. Examples of such binders include polyvinylidene fluoride (PVDF), polyvinyl alcohol, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material of the negative electrode active material layer is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

The negative electrode active material and optionally a binder and a conductive material may be dissolved or dispersed in a solvent to prepare a composition for forming a negative electrode active material layer, which may be applied on a negative electrode current collector and dried to produce the negative electrode. Alternatively, the negative electrode may be manufactured by casting the composition for forming a negative electrode active material layer on a separate support, peeling a film from the support, and then laminating the film on a negative electrode current collector.

The separator is to separate the negative electrode and the positive electrode, and to provide a passage for lithium ions to move. Any separator may be used without particular limitation as long as it is generally used as a separator in the lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multilayer structure.

The electrolyte may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto. As specific example, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic hydrocarbon group having 2 to 20 carbon atoms, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable.

The lithium salt may be any compound without particular limitation as long as it can provide lithium ions used in a lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt may be LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like. The lithium salt is preferably used at a concentration ranging from 0.1 M to 2.0 M. When the concentration of the lithium salt is within the above range, the electrolyte has an appropriate conductivity and viscosity, whereby excellent electrolyte performance can be exhibited, and lithium ions can effectively move.

In order to improve the lifespan of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

Since the lithium secondary battery including the positive electrode active material according to the present invention has excellent capacity, initial efficiency, and resistance characteristics, it is useful in the field of portable devices such as mobile phones, laptop computers, digital cameras, and electric vehicles such as hybrid electric vehicle (HEV) and electric vehicle (EV).

The external shape of the lithium secondary battery of the present invention is not particularly limited, but may be a cylindrical type using a can, a prismatic type, a pouch type, or a coin type.

The lithium secondary battery according to the present invention can not only be used in battery cells used as a power source for small devices, but can also be preferably used as a unit cell in medium to large-sized battery modules containing multiple battery cells.

Accordingly, a battery module including the lithium secondary battery as a unit cell and a battery pack including the same are provided.

The battery module or battery pack may be used as a power source for any one or more medium and large-sized devices among a power tool; electric vehicles, including electric vehicles (EV), hybrid electric vehicles, and plug-in hybrid electric vehicles (PHEV); or a system for power storage.

### [Modes for Carrying Out the Invention]

Hereinafter, examples of the present invention will be described in detail so that those skilled in the art can easily implement the present invention. However, the present invention may be embodied in a variety of forms and is not limited to the examples described herein.

### Examples and Comparative Examples

### Example 1

A mixture was prepared by mixing a precursor in the form of a secondary particle (composition: Ni_{0.96}Co_{0.01}Mn_{0.03}(OH)₂, D₅₀: 5.15 µm) formed by aggregation of tens to hundreds of primary particles and LiOH so that the ratio ((Ni+Co+Mn):Li) of the total mole number of transition metals (Ni+Co+Mn) contained in the precursor and the mole number of lithium contained in LiOH (Li) was 1:1.06.

The mixture was pre-calcined at 400°C for 5 hours under an oxygen atmosphere to prepare a pre-calcined product.

The pre-calcined product was first calcined at 840°C for 12 hours under an oxygen atmosphere, and the obtained powder was pulverized at 16,000 rpm using a pin mill (RETSCH, ZM-200), and then second calcined at 770°C for 12 hours to produce a calcined product (lithium nickel cobalt manganese oxide).

### Example 2

A mixture was prepared by mixing a precursor in the form of a secondary particle (composition: Ni_{0.96}Co_{0.01}Mn_{0.03}(OH)₂, D₅₀: 5.15 µm) formed by aggregation of tens to hundreds of primary particles and LiOH so that the ratio ((Ni+Co+Mn):Li) of the total mole number of transition metals (Ni+Co+Mn) contained in the precursor and the mole number of lithium contained in LiOH (Li) was 1:1.06.

The mixture was pre-calcined at 400°C for 5 hours under an oxygen atmosphere to prepare a pre-calcined product.

The pre-calcined product was first calcined at 840°C for 6 hours under an oxygen atmosphere, and then lowered to a temperature of 770°C and second calcined at 770°C for 12 hours to produce a calcined product (lithium nickel cobalt manganese oxide).

### Example 3

A mixture was prepared by mixing a precursor in the form of a secondary particle (composition: Ni_{0.96}Co_{0.01}Mn_{0.03}(OH)₂, D₅₀: 5.15 µm) formed by aggregation of tens to hundreds of primary particles and LiOH so that the ratio ((Ni+Co+Mn):Li) of the total mole number of transition metals (Ni+Co+Mn) contained in the precursor and the mole number of lithium contained in LiOH (Li) was 1:1.06.

The mixture was pre-calcined at 350°C for 5 hours under an oxygen atmosphere to prepare a pre-calcined product.

The pre-calcined product was first calcined at 840°C for 12 hours under an oxygen atmosphere, and the obtained powder was pulverized at 16,000 rpm using a pin mill (RETSCH, ZM-200), and then second calcined at 770°C for 12 hours to produce a calcined product (lithium nickel cobalt manganese oxide).

### Example 4

A mixture was prepared by mixing a precursor in the form of a secondary particle (composition: Ni_{0.96}Co_{0.01}Mn_{0.03}(OH)₂, D₅₀: 5.15 µm) formed by aggregation of tens to hundreds of primary particles and LiOH so that the ratio ((Ni+Co+Mn):Li) of the total mole number of transition metals (Ni+Co+Mn) contained in the precursor and the mole number of lithium contained in LiOH (Li) was 1:1.06.

The mixture was pre-calcined at 400°C for 5 hours under an oxygen atmosphere to prepare a pre-calcined product.

The pre-calcined product was first calcined at 800°C for 12 hours under an oxygen atmosphere, and the obtained powder was pulverized at 16,000 rpm using a pin mill (RETSCH, ZM-200), and then second calcined at 770°C for 12 hours to produce a calcined product (lithium nickel cobalt manganese oxide).

### Example 5

A mixture was prepared by mixing a precursor in the form of a secondary particle (composition: Ni_{0.96}Co_{0.01}Mn_{0.03}(OH)₂, D₅₀: 5.15 µm) formed by aggregation of tens to hundreds of primary particles and LiOH so that the ratio ((Ni+Co+Mn):Li) of the total mole number of transition metals (Ni+Co+Mn) contained in the precursor and the mole number of lithium contained in LiOH (Li) was 1:1.06.

The mixture was pre-calcined at 400°C for 5 hours under an oxygen atmosphere to prepare a pre-calcined product.

The pre-calcined product was first calcined at 860°C for 12 hours under an oxygen atmosphere, and the obtained powder was pulverized at 16,000 rpm using a pin mill (RETSCH, ZM-200), and then second calcined at 770°C for 12 hours to produce a calcined product (lithium nickel cobalt manganese oxide).

### Comparative Example 1

A mixture was prepared by mixing a precursor in the form of a secondary particle (composition: Ni_{0.96}Co_{0.01}Mn_{0.03}(OH)₂, D₅₀: 5.15 µm) formed by aggregation of tens to hundreds of primary particles and LiOH so that the ratio ((Ni+Co+Mn):Li) of the total mole number of transition metals (Ni+Co+Mn) contained in the precursor and the mole number of lithium contained in LiOH (Li) was 1:1.06.

The mixture was first calcined at 840°C for 12 hours under an oxygen atmosphere, and the obtained powder was pulverized at 16,000 rpm using a pin mill (RETSCH, ZM-200), and then second calcined at 770°C for 12 hours to produce a calcined product (lithium nickel cobalt manganese oxide).

### Comparative Example 2

A mixture was prepared by mixing a precursor in the form of a secondary particle (composition: Ni_{0.96}Co_{0.01}Mn_{0.03}(OH)₂, D₅₀: 5.15 µm) formed by aggregation of tens to hundreds of primary particles and LiOH so that the ratio ((Ni+Co+Mn):Li) of the total mole number of transition metals (Ni+Co+Mn) contained in the precursor and the mole number of lithium contained in LiOH (Li) was 1:1.06.

The mixture was first calcined at 840°C for 6 hours under an oxygen atmosphere, and then lowered to a temperature of 770°C and second calcined at 770°C for 12 hours to produce a calcined product (lithium nickel cobalt manganese oxide).

### Comparative Example 3

A mixture was prepared by mixing a precursor in the form of a secondary particle (composition: Ni_{0.96}Co_{0.01}Mn_{0.03}(OH)₂, D₅₀: 5.15 µm) formed by aggregation of tens to hundreds of primary particles and LiOH so that the ratio ((Ni+Co+Mn):Li) of the total mole number of transition metals (Ni+Co+Mn) contained in the precursor and the mole number of lithium contained in LiOH (Li) was 1:1.06.

The mixture was pre-calcined at 550°C for 5 hours under an oxygen atmosphere to prepare a pre-calcined product.

The pre-calcined product was first calcined at 840°C for 12 hours under an oxygen atmosphere, and the obtained powder was pulverized at 16,000 rpm using a pin mill (RETSCH, ZM-200), and then second calcined at 770°C for 12 hours to produce a calcined product (lithium nickel cobalt manganese oxide).

### Experimental Example

### Experimental Example 1: Particle Size Analysis of Positive Electrode Active Material (1)

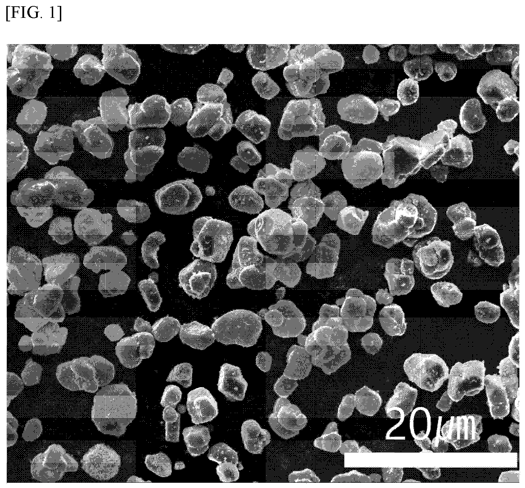

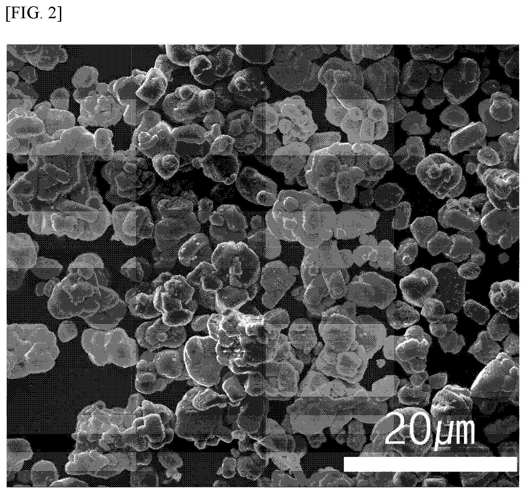

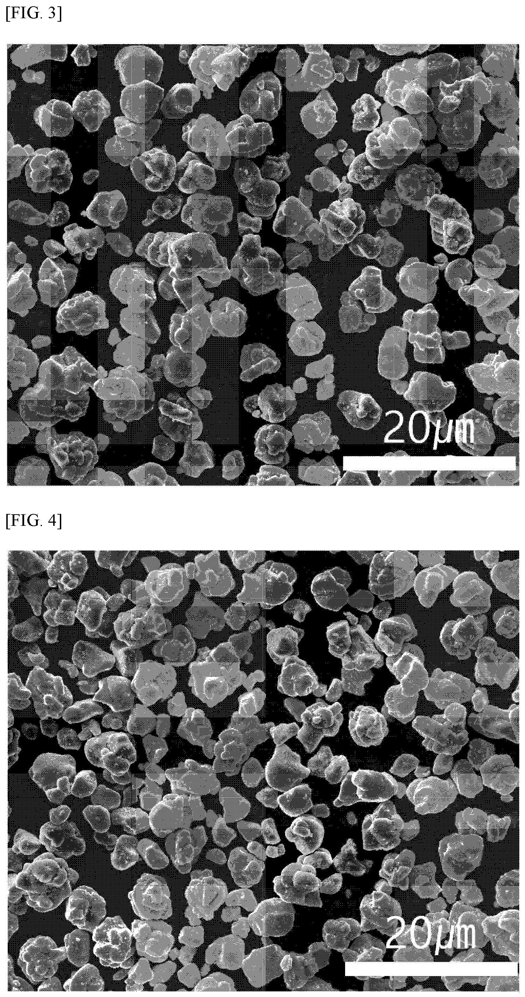

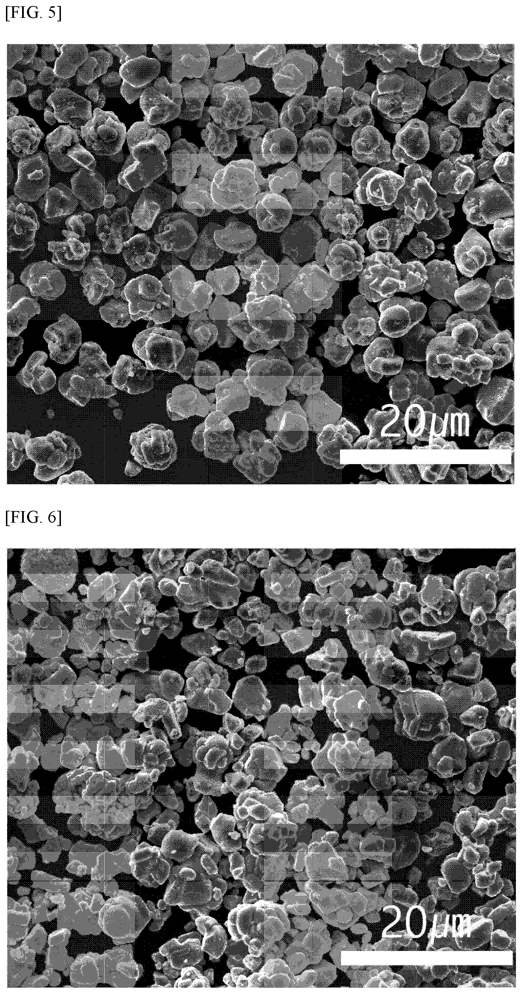

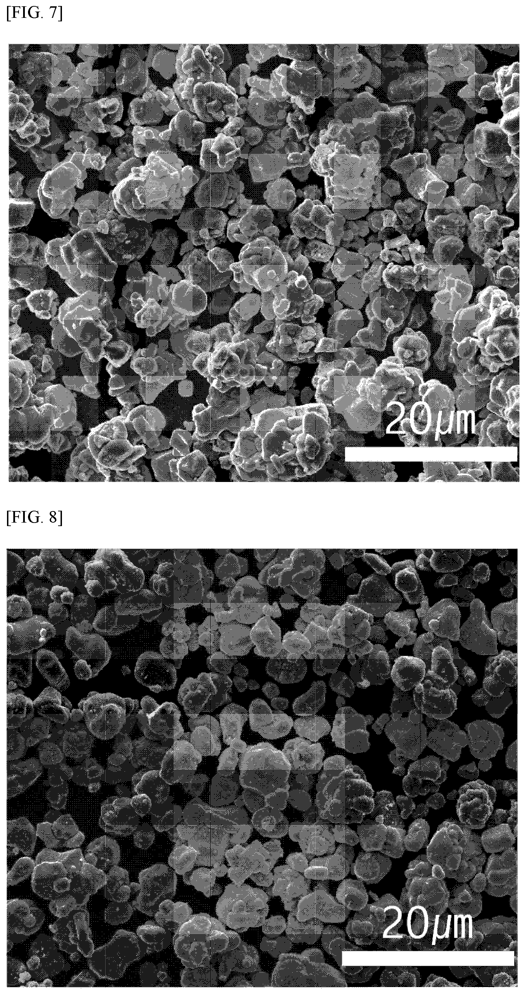

SEM images (5000×) of each positive electrode active material produced in Examples and Comparative Examples were obtained using SEM (FEI, Inspect F), and were shown in FIG. 1 (Example 1), FIG. 2 (Example 2), FIG. 3 (Example 3), FIG. 4 (Example 4), FIG. 5 (Example 5), FIG. 6 (Comparative Example 1), FIG. 7 (Comparative Example 2), and FIG. 8 (Comparative Example 3).

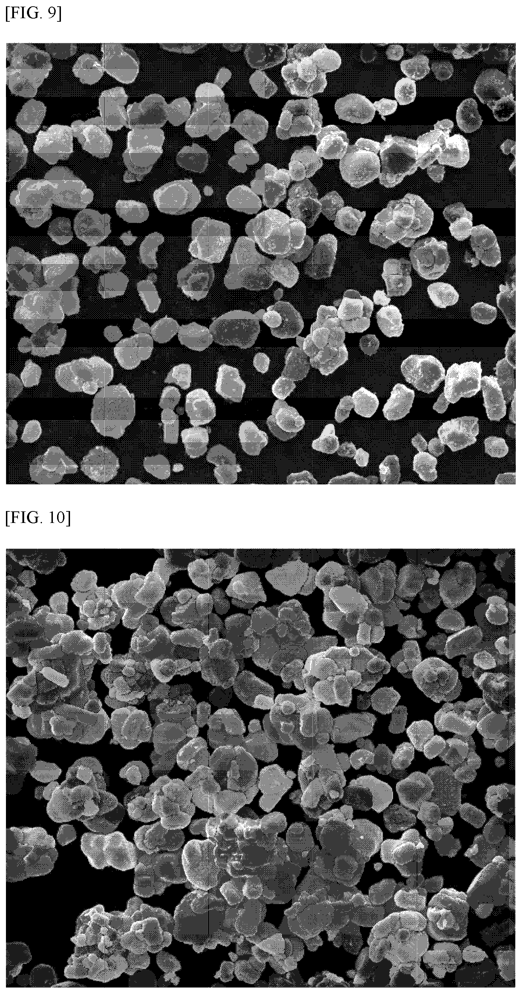

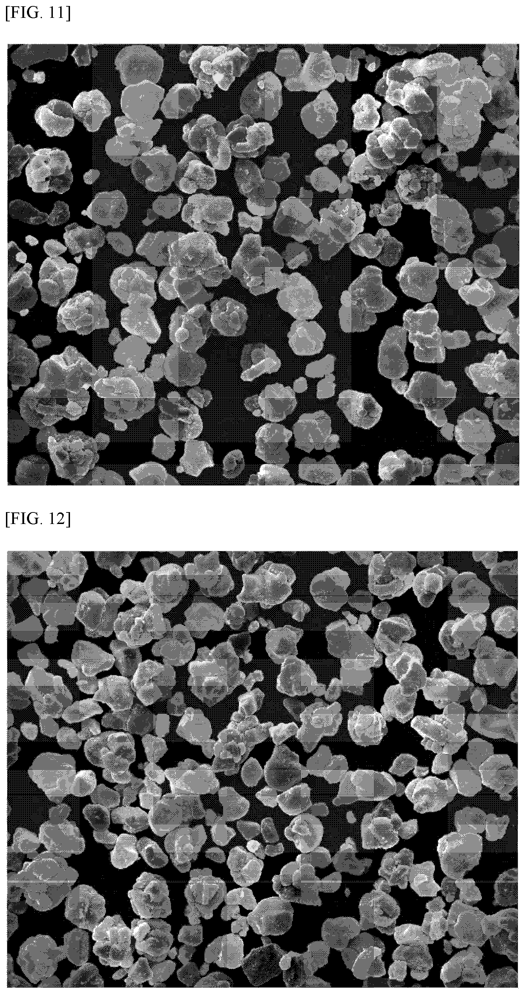

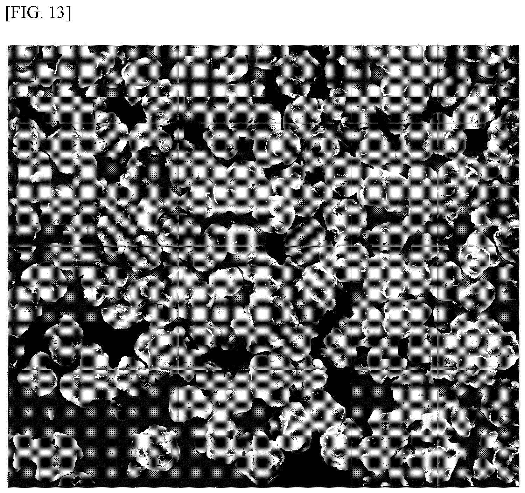

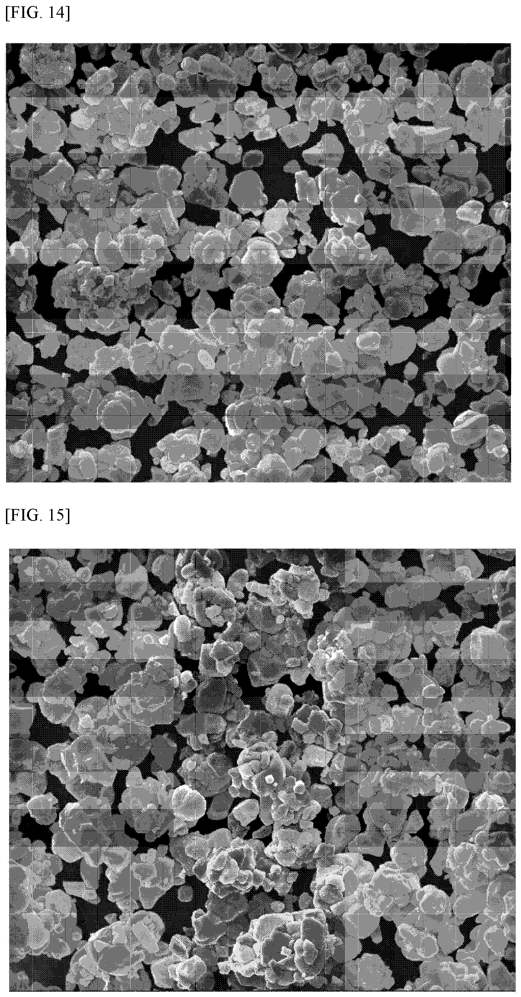

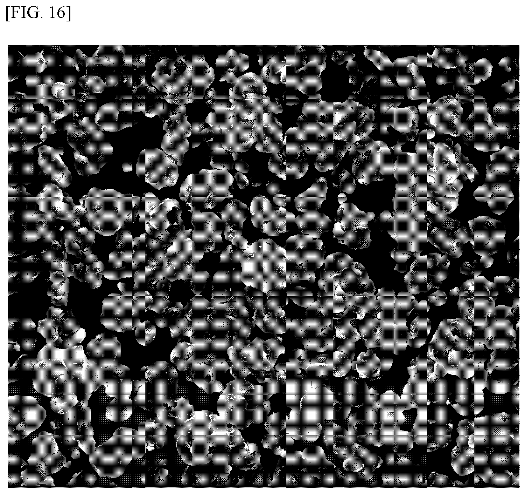

In addition, using an image processing program (LG Chemical, DX program), the boundaries of the primary particles present in the SEM images (5000×) of each positive electrode active material produced in Examples and Comparative Examples were divided and displayed in random colors. FIGS. 9 to 16 are sequentially diagrams in which SEM images (5000×) of each positive electrode active material produced in Examples 1 to 5 and Comparative Examples 1 to 3 are image-processed and the boundaries of primary particles are divided and displayed in random colors.

Using the diagrams in which the boundaries of primary particles are divided and displayed in random colors, the area of each primary particle was calculated through the number of pixels corresponding to each of n primary particles; the particle diameter (Dᵢ=2rᵢ) and volume (Vᵢ=4/3×πrᵢ³) of each primary particle present in the SEM image were calculated using the radius (rᵢ) of a circle having the same area as the area of each primary particle; and the particle diameters at points that are 10%, 50%, and 90% of the volume cumulative distribution according to the particle diameter were calculated from all the calculated particle diameters and volumes of the primary particles, thereby confirming D_{v,10}, D_{v,50}, and D_{v,90}, and the values of D_{v,50} and span ((D_{v,90}-D_{v,10})/D_{v,50}) were shown in Table 1 below.

### Experimental Example 2: Particle Size Analysis of Positive Electrode Active Material (2)

Each positive electrode active material (powder) produced in the examples and comparative examples was taken in an amount of 0.01 g, placed in a vial containing 30 ml of ultrapure water and 500 µl of dispersant, dispersed for 1 minute using a sonicator, and then placed in a PSA (Malvern, Mastersizer 3000) and analyzed to confirm D₅₀, which was shown in Table 1 below.

Here, the D₅₀ means a particle diameter at the 50% point of the volume cumulative distribution according to particle diameter.

**[Table 1]**

| Division | Span ((D_{v,90}-D_{v,10})/D_{v,50}) value | D_{v,50} | D₅₀ (µm) measured by PSA |
|---|---|---|---|
| Example 1 | 1.04 | 2.58 | 5.48 |
| Example 2 | 1.02 | 2.70 | 5.55 |
| Example 3 | 1.01 | 3.05 | 5.97 |
| Example 4 | 0.88 | 3.01 | 5.52 |
| Example 5 | 0.92 | 3.13 | 5.59 |
| Comparative Example 1 | 1.26 | 3.02 | 5.73 |
| Comparative Example 2 | 1.25 | 2.87 | 5.80 |
| Comparative Example 3 | 1.27 | 2.93 | 5.66 |

Referring to Table 1 above, in the case of Examples 1 and 2 in which the pre-calcination was performed at 400°C for 5 hours, it can be confirmed that the span value is relatively low compared to Comparative Examples 1 to 3 in which the pre-calcination was not performed or was performed at 550°C. This result is because the uniformity of the primary particles was improved through the pre-calcination within a specific temperature range.

### Experimental Example 3: Evaluation of Battery Performance

Each of the positive electrode active materials produced in the examples and comparative examples, a conductive material (Denka, FX35), a first binder (KUREHA, KF9709), and a second binder (ZEON, BM740H) were mixed at a weight ratio of 95:2:3:0.15 in an N-methylpyrrolidone (NMP) solvent to prepare a positive electrode slurry. The positive electrode slurry was applied on one surface of an aluminum current collector, dried at 130°C, and rolled so that a porosity of the positive electrode active material layer became 20% by volume, thereby preparing a positive electrode.

A lithium metal electrode was used as a negative electrode, and a porous polyethylene separator was interposed between the positive and negative electrodes to manufacture an electrode assembly, which was then positioned inside a battery case, and an electrolyte was injected into the case to manufacture a half-cell. In this case, the electrolyte was prepared by dissolving 1.0M LiPF₆ in an organic solvent in which ethylene carbonate (EC), ethyl methyl carbonate (EMC), and diethyl carbonate (DEC) were mixed at a volume ratio of 3:3:4.

For each of the half-cells manufactured in this way, the initial charge capacity and initial discharge capacity were measured while charging to 4.25 V in CC (0.1 C)-CV mode at 25°C (end current: 0.05 C), and discharging to 3.0 V in CC (0.1 C) mode, and the initial discharge capacity, initial efficiency, and direct current internal resistance (DCIR) were calculated, which were shown in Table 2 below. For reference, the initial efficiency value is a percentage value of the initial discharge capacity with respect to the initial charge capacity, and the DCIR value is a value calculated by dividing a difference between an initial voltage and a voltage at 60 seconds while discharging at a constant current of 0.1 C by the applied current. In this case 1 C = 200 mA/g was set.

In addition, the capacity of the lithium secondary battery was measured by repeating the charge/discharge cycle 50 times at a constant current of 0.5 C in the range of 2.5 to 4.45 V at 45°C, and the percentage of the 50^{th} cycle discharge capacity to the 1^{st} cycle discharge capacity was taken as a capacity retention rate, which was shown in Table 2 below. In addition, the percentage of DICR obtained by dividing the voltage drop (ΔV) for 60 seconds in the 50^{th} discharge cycle by the current with respect to DCIR obtained by dividing the voltage drop (ΔV) for 60 seconds in the 1^{st} discharge cycle by the current was taken as a resistance increase rate, which was shown in Table 2 below.

**[Table 2]**

| Division | Initial discharge capacity (mAh/g) | Initial efficiency (%) | DCIR (Ω) |
|---|---|---|---|
| Example 1 | 211.8 | 86.6 | 26.8 |
| Example 2 | 210.2 | 86.5 | 27.5 |
| Example 3 | 213.1 | 87.0 | 30.2 |
| Example 4 | 212.4 | 86.4 | 29.4 |
| Example 5 | 209.9 | 86.4 | 29.7 |
| Comparative Example 1 | 207.5 | 85.3 | 33.3 |
| Comparative Example 2 | 208.3 | 85.7 | 32.6 |
| Comparative Example 3 | 208.4 | 85.1 | 32.9 |

Referring to Table 2 above, it can be confirmed that the batteries including the positive electrode active materials of Examples 1 to 5 have higher initial discharge capacity and initial efficiency, and lower DCIR values, compared to the batteries including the positive electrode active materials of Comparative Examples 1 to 3.

In conclusion, it can be seen that the positive electrode active material manufactured by the manufacturing method according to the present invention has improved uniformity of primary particles, which are unit particles, and increased amount of reversible lithium in the layered structure of the positive electrode active material, thereby improving the capacity, initial efficiency, and resistance characteristics of a lithium secondary battery.

## Claims

1. A method for manufacturing a positive electrode active material, including the steps of:
(A) mixing a nickel cobalt manganese-based hydroxide having a nickel content of 50 mol% or more among the total transition metals with a lithium-containing raw material to prepare a mixture;
(B) pre-calcining the mixture at 300°C or higher and less than 450°C under an oxygen atmosphere to prepare a pre-calcined product; and
(C) selectively mixing a doping element-containing raw material into the pre-calcined product and then calcining the mixture at 700°C to 1,100°C under an oxygen atmosphere to produce a calcined product.

2. The method for manufacturing a positive electrode active material according to claim 1, wherein the nickel cobalt manganese-based hydroxide has a composition represented by Chemical Formula 2 below:
[Chemical Formula 2] Niₐ₂Co_{b2}Mn_{c2}M²_{d2}(OH)₂
wherein:
M² is at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si,
0.5≤a2<1, 0<b2<0.5, 0<c2<0.5, 0≤d2≤0.2, and a2+b2+c2+d2=1.

3. The method for manufacturing a positive electrode active material according to claim 1, wherein the calcination in the step (C) is performed by first calcining at 700°C to 1,000°C under an oxygen atmosphere, and then second calcining at 700°C to 1,100°C, wherein the first calcination temperature is higher than the second calcination temperature.

4. The method for manufacturing a positive electrode active material according to claim 1, wherein the positive electrode active material comprises a lithium nickel cobalt manganese-based oxide in the form of a single particle, which has a nickel content of 50 mol% or more among the total transition metal and is composed of 50 or less primary particles, wherein the primary particles have a span ((D_{v,90}-D_{v,10})/D_{v,50}) value of 1.2 or less.

5. The method for manufacturing a positive electrode active material according to claim 4, wherein the lithium nickel cobalt manganese-based oxide has a composition represented by the following Chemical Formula 1:
[Chemical Formula 1] Li₁₊ₓNiₐ₁Co_{b1}Mn_{c1}M¹_{d1}O₂
wherein:
M¹ is at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si,
0.0≤x≤0.1, 0.5≤a1<1, 0<b1<0.5, 0<c1<0.5, 0≤d1≤0.2, and a1+b1+c1+d1=1.

6. The method for manufacturing a positive electrode active material according to claim 4, wherein the D_{v,50} of the primary particle is 0.5 µm to 10 µm.

7. The method for manufacturing a positive electrode active material according to claim 1, wherein the positive electrode active material has a D₅₀ of 3 µm to 10 µm as measured by a particle size analyzer (PSA).
